# EUROPÄISCHE PATENTSCHRIFT

(11) **EP 2 364 231 B1**
(45) Veröffentlichungstag und Bekanntmachung des Hinweises auf die Patenterteilung: **23.04.2014**
(21) Anmeldenummer: 09764752.3
(22) Anmeldetag: 02.11.2009
(51) Int. Cl.: B23F 19/00

(54) **WÄLZSCHÄLVERFAHREN UND -VERWENDUNG**
HOB PEELING METHOD AND USE
PROCÉDÉ ET UTILISATION DE DÉCOLLETAGE EN DÉVELOPPANTE

(30) Priorität: 03.11.2008 DE 102008037514
(43) Veröffentlichungstag der Anmeldung: 14.09.2011
(73) Patentinhaber: Profilator GmbH & Co. KG, 42329 Wuppertal (DE)
(72) Erfinder: HEINEMANN, Wolfgang, 42855 Remscheid (DE); SCHULZ, Mario, 42349 Wuppertal (DE)
(74) Vertreter: Grundmann, Dirk
(86) Internationale Anmeldenummer: PCT/EP2009/064411
(87) Internationale Veröffentlichungsnummer: WO 2010/060733

(56) Entgegenhaltungen:
- DE-C1- 4 122 460
- DE-C2- 3 915 976

## Beschreibung

Die Erfindung betrifft die Verwendung einer Vorrichtung zum Verzahnen von Werkrädern durch Wälzschälen, mit einer um eine Werkstückdrehachse drehantreibbaren Werkstückspindel zur Aufnahme des Werkrades, mit einer um eine Werkzeugdrehachse drehantreibbaren, ein Schneidkanten aufweisendes Schälrad tragenden Werkzeugspindel, wobei die Werkzeugspindel und die Werkstückspindel in einem festen oder variablen Achskreuzwinkel zueinander positionierbar sind und zum Zwecke eines Vorschubes und einer Zustellung die Werkzeugspindel relativ zur Werkstückspindel in Radialrichtung und Achsrichtung bezogen auf die Werkstückdrehachse mittels Positionierantrieben verlagerbar ist, und mit einer elektronischen Steuereinrichtung, um die Positionierantriebe anzusteuern und die Werkzeugspindel und die Werkstückspindel in einem vorgegebenen Drehzahlverhältnis ggf. mit sich ändernder Phasenlage drehanzutreiben.

Eine Vorrichtung der zuvor beschriebenen Art wird von der DE 10 2005 049 530 B4 beschrieben. Die dort beschriebene Vorrichtung besitzt Spindelantriebe und Positionierantriebe, die von einer elektronischen Steuereinrichtung angetrieben werden. Dort werden nicht nur die Positionierantriebe sondern auch die Spindelantriebe von sogenannten Torque-Motoren ausgebildet. Derartige Motoren sind sehr steif und unempfindlich gegen Drehmomentstöße.

Die Erfindung betrifft darüber hinaus sowie ein Verfahren zum Verzahnen von Werkrädern durch Wälzschälen, mit einem Schneidkanten aufweisenden Schälrad, mit einer um eine Werkstückdrehachse drehangetriebenen Werkstückspindel zur Aufnahme des Werkrades und mit einer um eine Werkzeugdrehachse drehangetriebenen, das Schälrad tragenden Werkzeugspindel, wobei die Werkzeugspindel und die Werkstückspindel in einem festen oder variablen Achskreuzwinkel zueinander positioniert sind, ein Vorschub bzw. eine Zustellung die Werkzeugspindel relativ zur Werkstückspindel in Radialrichtung bzw. Achsrichtung bezogen auf die Werkstückdrehachse erfolgt und die Antriebe von Werkzeugspindel und Werkstückspindel in einem vorgegebenen Drehzahlverhältnis ggf. mit sich ändernder Phasenlage drehangetrieben werden.

Die DE 41 22 460 C1 beschreibt ein Verfahren zum Erzeugen von nach innen tiefer werdenden Hinterlegungen an geraden Innenverzahnungen, insbesondere an Schiebemuffen. Die Innenverzahnung soll durch Wälzschälen mit einem Schälrad erzeugt werden, das einem gleichzeitigen Axial- und Radialvorschub bis zum Erreichen der geforderten Hinterlegungstiefe unterliegt. Wegen des zusätzlichen Vorschubs in Umfangsrichtung werden mit diesem Verfahren schrägverlaufende Vertiefungen in vorverzahnte Werkräder eingearbeitet.

Die DE 10 2005 049 528 A1 beschreibt ein Verfahren zum Herstellen von innenverzahnten Werkstücken, wobei die Zähne durch Wälzschälen auf Fertigkontur gebracht werden. Zuvor wurde der Rohling durch Räumen oder durch ein Rollverfahren vorbearbeitet.

Es ist bekannt, das Wälzschälen als Weichbearbeitungsverfahren zum Fertigen von Innenverzahnungen und Außenverzahnungen anzuwenden. Das Wälzschälen ist ein kontinuierliches Verzahnverfahren. Kinematisch liegt es zwischen dem Wälzfräsen und dem Wälzstoßen. Während das Wälzstoßen der Getriebekinematik eines Stirnantriebes ähnelt, ähnelt das Wälzschälgetriebe kinematisch einem Schraubradgetriebe. Mit Wälzschälen lässt sich eine Vielzahl von unterschiedlichen Verzahnungen herstellen. Mit einer windschiefen Anordnung von Werkstückachse und Werkzeugachse können auf einer Maschine sowohl Außen- als auch Innenverzahnungen hergestellt werden. Mit dem Wälzschälen können sowohl geradverzahnte als auch schrägverzahnte Werkstücke hergestellt werden.

Der Erfindung liegt die Aufgabe zugrunde, das Fertigungsspektrum der gattungsbildenden Vorrichtung bzw. des gattungsbildenden Verfahrens zu erweitern.

Gelöst wird die Aufgabe durch die im Anspruch 1 angegebene Verwendung sowie durch das im Anspruch 2 angegebene Verfahren, wobei die Unteransprüche bevorzugte Weiterbildungen der Verwendung oder des Verfahrens sind.

Das gattungsgemäße Verfahren bzw. die zur Durchführung des Verfahrens geeignete Vorrichtung zum Bearbeiten verzahnter oder unverzahnter Werkräder wird erfindungsgemäß dahingehend weitergebildet, dass dem axialen Vorschub eine radiale Austauch- oder Eintauchbewegung aus dem oder in das Werkrad überlagert ist. Das Austauchen erfolgt in einer Zone, die dem Ende des Vorschubs, also dem Ende der Verzahnung zugeordnet ist. Das Eintauchen erfolgt in einer Zone, die dem Beginn des Vorschubs, also dem Beginn der Verzahnung zugeordnet ist. Der Vorschub kann zwischen Eintauchen und Austauchen des Werkzeuges aus dem Werkrad im Wesentlichen rein axial gerichtet sein. Mit der überlagerten Radialbewegung in Form einer Eintauch- bzw. Austauchbewegung lassen sich Verzahnungen erzeugen, deren Zahnnuten am jeweiligen Ende radial und axial in die Oberfläche des unverzahnten Werkrades auslaufen. Es wird zunächst eine Geradverzahnung bzw. eine Schrägverzahnung gefertigt. Das Ende der Verzahnung bzw. des Konturverlaufs der Zahnnuten wird durch Radialkomponente der Austauchbewegung definiert. Mit dieser Art des Verfahrens ist es möglich, Innen- oder Außenverzahnungen zu fertigen, die kurz vor einer Kollisionsflanke, also beispielsweise einer Stufe enden. Anders als beim herkömmlichen Wälzstoßen ist ein endseitiger Freistich oder beim Wälzstoßen ist ein endseitiger Freistich vor der Kollisionsflanke entbehrlich. Jede Zahnnut besitzt dann eine Abschlussfläche, so dass die Zahnnut zumindest einseitig geschlossen ist. In einer Weiterbildung der Erfindung ist vorgesehen, dass die Scheitellinien der Rippen bzw. der Stollen des Schälrades in einer von einer Kegelmantelfläche gebildeten Hüllfläche liegen. Bei dieser Ausgestaltung des Schälrades benötigt die zur Durchführung des Verfahrens verwendete Vorrichtung nur eine Schwenkachse zum Einstellen des Achskreuzwinkels zwischen Werkstückspindel und Werkzeugspindel. Bezogen auf ein Koordinatensystem, in welchem die Werkstückspindelachse in der Z-Achse liegt und die X-Achse durch die Schneidkantenangriffszone geht, liegt dann die Werkzeugachse in einer Parallelebene zur Y-Z-Ebene. Die Schwenkachse zum Einstellen des Achskreuzwinkels α liegt dann in der X-Richtung, so dass die Werkzeugspindel in der Y-Z-Ebene zur Z-Achse geneigt ist. In einer Weiterbildung der Erfindung ist vorgesehen, dass die Verzahnung eines unverzahnten Rohlings im Wege mehrerer aufeinander folgenden Schnitte erfolgt. Mit jedem Schnitt erreicht die Schneidkante eine größere Eintrittstiefe. Die jeweilige Schnitttiefe kann dabei konstant bleiben, so dass schrittweise die Nut zwischen den Zahnflanken vertieft wird. In einer bevorzugten Ausgestaltung der Erfindung, die eigenständigen Charakter hat, ist vorgesehen, dass die aufeinanderfolgenden Schnitte jeweils eine verminderte Schnittlänge besitzen. Der erste Schnitt, welcher in den bevorzugt unverzahnten Rohling vorgenommen wird, besitzt dabei die längste Schnittlänge. Der darauf folgende Schnitt ist kürzer. Das Schälrad taucht beim zweiten Schnitt in Achsrichtung vor dem Ende der mit dem ersten Schnitt gefertigten Teilnut aus. Die radiale Austauchbewegung erfolgt somit am Ende des Vorschubs eines jeden Folgeschnitts in Achsrichtung vor der radialen Austauchbewegung eines jeweiligen vorangegangenen Schnittes. Bei dieser Art des Verfahrens ist die radiale Austauchbewegung derart der Axialbewegung überlagert, dass der Grund der gefrästen Nut zu Beginn bzw. am Ende in Form mehrerer in Achsrichtung hintereinanderliegenden Teilrundungen ausläuft. Mit dem zuvor beschriebenen Verfahren ist es möglich, zumindest einseitig sackähnlich endende, also geschlossene Zahnnuten einer Innen- oder Außenverzahnung zu fertigen. Es ist sogar möglich, beidseitig sackähnlich endende, also geschlossene Verzahnungen zu fertigen. Das zuvor beschriebene Verfahren erlaubt auch die Fertigung balliger Verzahnungen und insbesondere die Fertigung von Zahnnuten, deren Nutgrund auf einer Kreisbogenlinie bezogen auf die Querschnittsebene liegt. Bei dieser Art des Verfahrens erfolgt die radiale Austauchbewegung als überlagerte Bewegung zur Axialbewegung zu Beginn des Vorschubs und die Eintauchbewegung als Überlagerung zur Axialbewegung zum Ende des Vorschubs. Dem radialen Vorschub kann ein Vorschub in Umfangsrichtung überlagert werden, um schräg verzahnte Zahnräder herzustellen. Der Vorschub wird dabei durch eine Phasenvariation der Drehantriebe für die Werkstückspindel und die Werkzeugspindel realisiert.

Ausführungsbeispiele der Erfindung werden nachfolgend anhand beigefügter Zeichnungen erläutert. Es zeigen:

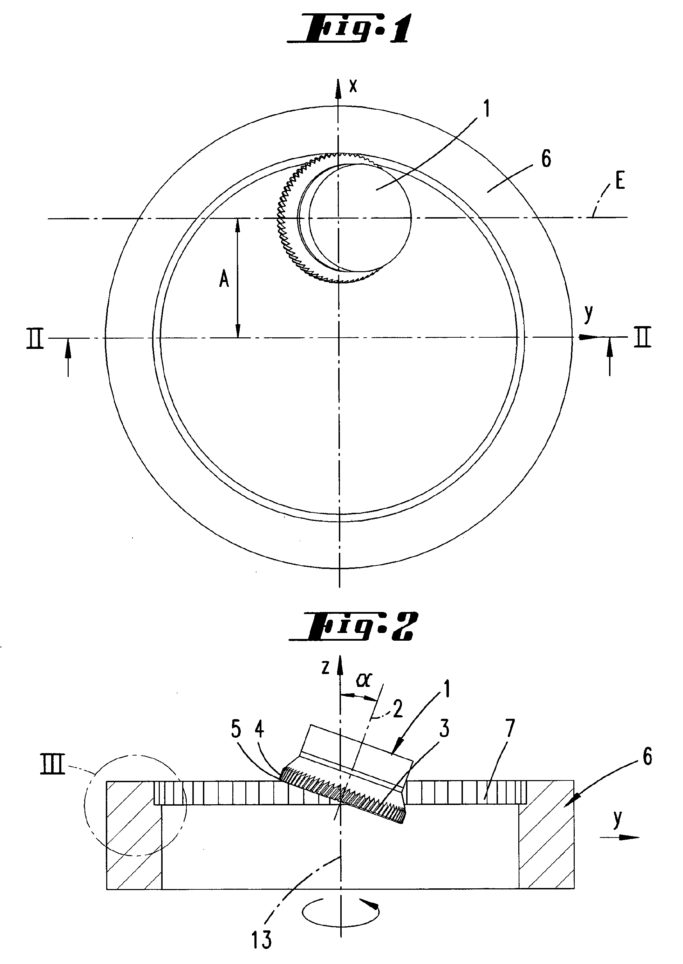

- Fig. 1: schematisch die Anordnung von Werkzeug 1 und Werkrad 6 in Richtung auf die X-Y-Ebene,
- Fig. 2: den Schnitt gemäß der Linie II-II in Figur 1 durch die Y-Z-Ebene,
- Fig. 3: vergrößert die Querschnittsfläche im Schnitt gemäß Figur 2,
- Fig. 4: vergrößert den Ausschnitt IV in Figur 3,
- Fig. 5: eine Darstellung gemäß Figur 3 eines komplexeren, mit drei Verzahnungen ausgestatteten Werkstücks und
- Fig. 6: eine Darstellung gemäß Figur 4 einer Außenverzahnung mit beidseitig sackförmigem Ende.

Die Vorrichtung besitzt einen Aufbau, wie er in den Zeichnungen der DE 10 2005 049 530 B4 dargestellt ist. Die Vorrichtung besitzt ein Maschinenbett, welches eine Werkstückspindel trägt. Die Werkstückspindel kann ortsfest am Maschinenbett befestigt sein. Die Werkzeugspindel ist dann relativ gegenüber dem Maschinenbett beweglich. Bevorzugt ist jedoch die Werkzeugspindel ortsfest am Maschinenbett befestigt und die Werkstückspindel wird zum Zwecke der Zustellung und des Vorschubs verlagert. Die Werkstückspindel besitzt einen Torque-Motor, der von einer elektrischen Steuereinrichtung getrieben wird. Das Werkrad sitzt auf der Spindelachse, also auf dem Rotor des Torque-Motors. Der Antrieb der Werkstückspindel kann aber auch über einen Synchron-Motor, ein Untersetzungsgetriebe und/oder einen Riemenantrieb erfolgen.

Eine Werkzeugspindel ist in drei Raumrichtungen als Folge einer Lagerung auf Schlitten linear in Bezug auf das Maschinenbett verlagerbar. Die Verlagerung der Werkzeugspindel erfolgt mittels Positionierantrieben. Letztere können ebenfalls von Torque-Motoren ausgebildet sein. Die Positionierantriebe werden ebenso wie die beiden Spindelantriebe von der Steuereinrichtung angetrieben. Die Werkzeugspindel ist zudem um mindestens eine Achse schwenkbar, um die Werkzeugspindelachse in einen Achskreuzwinkel zur Werkstückspindelachse zu bringen. Die Werkzeugspindel, die ebenfalls bevorzugt von einem Torque-Motor ausgebildet ist, trägt das Schälrad 1. Das Schälrad 1 sitzt unmittelbar auf dem Rotor des Torque-Motors. Alternativ dazu ist es möglich, das Werkzeug von einem Synchron-Motor anzutreiben. Dabei kann das Schälrad auch von einem Untersetzungsgetriebe angetrieben werden. Bevorzugt sitzt das Schälrad 1 unmittelbar auf der Werkzeugspindel.

Mit der elektronischen Steuereinrichtung können programmgesteuert die Positionierantriebe betätigt werden. Dies erfolgt zunächst zur Zustellung der Werkzeugspindel in Bezug auf das Werkstück und nachdem Werkstückspindel und Werkzeugspindel in Synchronlauf zueinander gebracht werden zum Zwecke des Vorschubs. Beim Verzahnen erfolgt der Vorschub in Richtung der Erstreckungsrichtung der Werkstückachse. Bei der Fertigung einer Schrägverzahnung erfolgt der Vorschub ebenfalls in dieser Richtung. Im Zuge der Vorschubs ändert sich jedoch die Phasenlage zwischen Werkstückspindel und Werkzeugspindel. Bei dem Werkzeug handelt es sich um ein Schälrad 1.

Das Schälrad 1 besitzt eine Vielzahl von im Wesentlichen gleichmäßig in Umfangsrichtung um die Schälraddrehachse 2 angeordnete Rippen. Diese Rippen verlaufen schräg zur Richtung der Schälraddrehachse 2. Es handelt sich um ein schrägverzahntes Schälrad 2. Der Winkel, um den die Rippen 3 gegenüber der Drehachse 2 versetzt angeordnet sind, entspricht dem Achskreuzwinkel α, auf den nachfolgend noch eingegangen wird. Der Achskreuzwinkel α kann bei etwa 20° liegen. Die Rippen 3 sind an der Umfangsfläche des Schälrades 1 angeordnet. Die Scheitellinien der Rippen 3 können in einer Hüllfläche 4 liegen, die einer Zylinderfläche entspricht. Bevorzugt wird die Hüllfläche 4, in welcher die Scheitellinien der Rippen 3 liegen, aber von einer Kegelmantelfläche gebildet, wobei die gedachte Kegelspitze entfernt von der freien Stirnseite des Schälrades 1 liegt.

Die freie Stirnseite des Schälrades 1 bildet Schneidkanten 5 aus. Die Schneidkanten 5 werden von treppenartig angeschliffenen Stirnseiten der Rippen 3 ausgebildet. Der Treppenschliff ist so ausgelegt, dass die am Werkstück angreifenden Schneidkanten 5 quer zur Vorschubsrichtung liegen.

Zufolge dieser Anordnung ergibt sich ein positiver Spanwinkel. Die Stirnfläche eines jeden Schneidzahnes, welcher mit seinen Rändern die Schneidkante 5 ausbildet, verläuft in einer Ebene, die um den Winkel α, also dem Achskreuzwinkel geneigt zur Drehebene der Werkzeugspindeldrehachse 2 geneigt ist. Die nicht dargestellte Werkstückspindel besitzt eine Werkstückspindeldrehachse 13, die die Z-Achse eines Koordinatensystems definiert. Die X-Achse dieses Koordinatensystems schneidet die Werkstückdrehachse 13 auf Höhe der Zahneingriffszone, also dem Punkt, an dem die Schneidkante 5 die tiefste Eingriffsstellung in das Werkrad 6 besitzt. Die rechtwinklig dazu verlaufende Achse bildet die Y-Achse. Eine durch die Schälraddrehachse 2 gelegte Parallelebene E zur Y-Z-Ebene besitzt einen Abstand A zur Y-Z-Ebene bzw. zur Werkstückdrehachse 13. Die Schälraddrehachse 2 ist innerhalb dieser um den Achsabstand A von der Y-Z-Ebene beabstandeten Parallelebene E schwenkbar um den Achskreuzwinkel α. Die zur Durchführung des Verfahrens verwendete Vorrichtung benötigt somit lediglich eine Schwenkachse, um den Achskreuzwinkel α einzustellen. Darüber hinaus muss der Achsabstand A variierbar sein. Dies kann entweder durch Verlagerung der Werkstückspindel oder der Werkzeugspindel gegenüber dem Maschinenbett ermöglicht werden.

Bei der Verzahnung wird das Werkrad 6 in Achsrichtung der Werkstückdrehachse 13, also in Z-Richtung vorgeschoben. Auch hier kann alternativ dazu die Werkzeugspindel in entsprechender Weise verlagert werden. Dem axialen Vorschub ist ein radialer Vorschub überlagerbar. Hierdurch lassen sich Verzahnungen erzeugen, bei denen die Zahnnuten in Achsrichtung verschiedene Nuttiefen aufweisen.

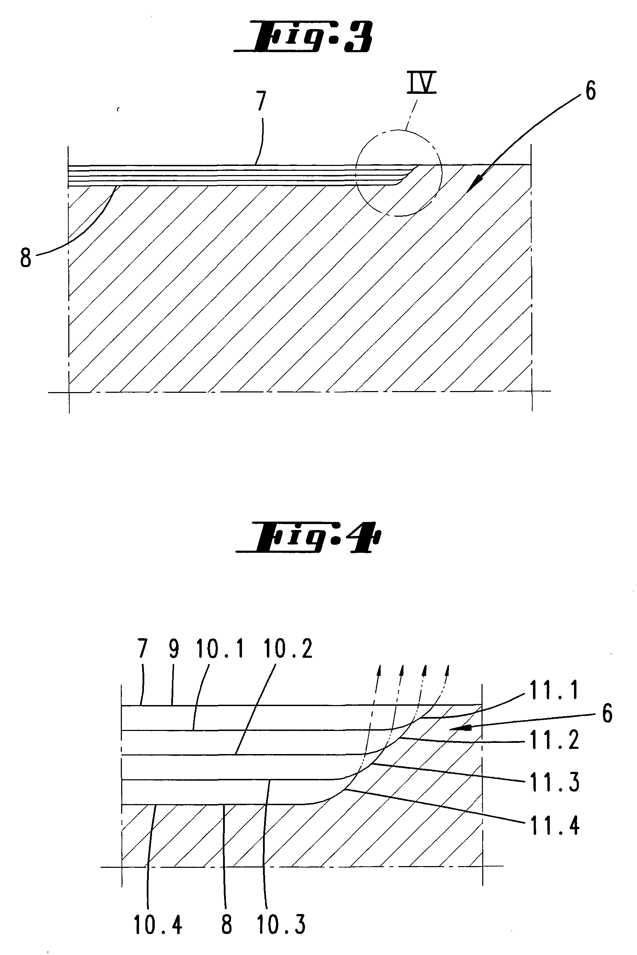

Bei der in den Figuren 3 und 4 gezeigten Variante wird eine Innenverzahnung 7 gefertigt. Die Innenverzahnung 7 besitzt ein links dargestelltes offenes Ende und ein rechts dargestelltes sackförmiges, geschlossenes Ende. Im Bereich des sackförmigen Endes läuft der Nutgrund 8 unter Ausbildung einer in mehreren Stufen gefrästen Quasi-Rundung in die Außenwandung 9 des Rohlings 6 aus. Zur Fertigung dieser Innenverzahnung wird in einer ersten Abstandsstellung A zunächst mit einem rein axialen Vorschub 10.1 mit einer voreingestellten Schnitttiefe bearbeitet. Zum Ende des axialen Vorschubs wird der Axialkomponente eine Radialkomponente überlagert. Der Achsabstand A wird dabei vermindert, so dass die Schnittlinie 10.1 auf einem Bogen verläuft und eine Rundung 11.1 fertigt, die in die Außenwandung 9 ausläuft.

In einem zweiten Schnitt 10.2, der mit vergrößertem Achsabstand A durchgeführt ist und ebenfalls zunächst rein axial erfolgt, wird der Nutgrund des ersten Schnittes 10.1 um dieselbe Schnitttiefe vertieft. Auch der zweite Schnitt 10.2 geht zum Ende des axialen Vorschubs in einen Rundverlauf über, die radiale Überlagerung erfolgt hier aber in Achsrichtung vorher, so dass die mit dem zweiten Schnitt 10.2 gefertigte Rundung 11.2 in die mit dem ersten Schnitt 10.1 gefertigte Rundung 11.1 ausläuft.

Der dritte Schnitt 10.2 erfolgt bei wiederum vergrößertem Achsabstand A zunächst rein axial bis in den Bereich des Endes der Nut. Auch diesmal erfolgt die Überlagerung der radialen Vorschubskomponente gegenüber dem zuvor getätigten Schnitt 10.2 vorher, so dass die vom dritten Schnitt 10.3 gefertigte Endverrundung 11.3 in die vom zweiten Schnitt 10.2 gefertigte Endverrundung 11.2 ausläuft.

Die diesen Schnitten folgenden Schnitte sind ebenfalls jeweils derartig verkürzt, dass die Endrundungen in die zuvor gefertigten Endrundungen übergehen. In der Figur 4 ist der letzte Schnitt mit 10.4 bezeichnet. Die vom letzten Schnitt gefertigte Endverrundung 11.4 gibt erkennbar in die von dem zuvor gefertigten Schnitt erzeugte Endrundung über.

Das mit dem Verfahren gefertigte Nutende besteht somit aus einer Vielzahl hintereinander liegenden Teilrundungen 11.1, 11.2, 11.3 und 11.4.

Jede Schnittlinie schneidet somit alle vorangegangenen Schnittlinien innerhalb der Querschnittsfläche der Zahnnut.

Bei der zuvor beschriebenen Variante erfolgten die Schnitte 10.1 bis 10.4 jeweils versetzt um denselben Betrag. Es ist jedoch auch möglich, diese Schnitte mit unterschiedlichen Schnitttiefen, beispielsweise mit sich stetig vermindernder Schnitttiefe oder mit stetig vergrößernder Schnitttiefe vorzunehmen.

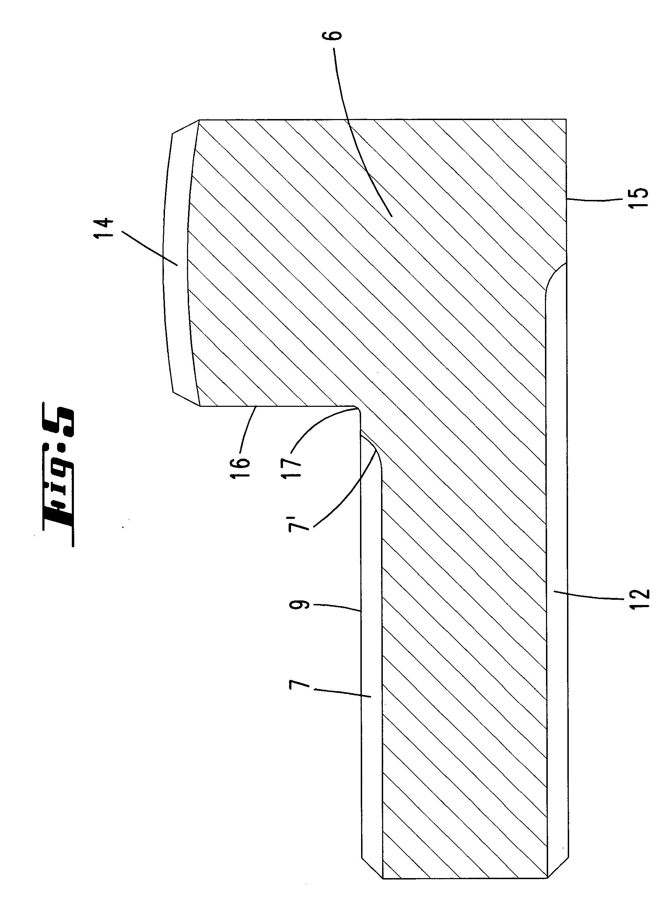

Die Figur 5 zeigt einen Querschnitt gemäß der Figur 3 eines komplexeren Werkstücks. Dieses Werkstück besitzt eine erste Innenverzahnung 7, die mit dem zuvor Beschriebenen gefertigt werden kann. Das Werkstück besitzt eine weitere Innenverzahnung 14, die an beiden Seiten offen ist. Diese Innenverzahnung 14 besitzt ballige Zähne und insbesondere einen auf einer Bogenlinie verlaufenden Grund der Verzahnung 14. Hier ist die Eintauchtiefe an den beiden Enden der Verzahnung 14 größer als im Bereich der Mitte der Verzahnung 14. Auch hier wird der Achsabstand 8 während des axialen Vorschubs variiert, so dass der Vorschub jeweils zu Beginn und zum Ende eine Radialkomponente erhält. Anders als bei der zuvor beschriebenen Variante wird die Zahnnut aber jeweils zu Beginn und zum Endes des axialen Vorschubs tiefer gefräst. Die Austauchbewegung erfolgt somit zu Beginn des Axialvorschubes und die Eintauchbewegung zum Ende des Axialvorschubs.

Mit der Bezugsziffer 12 ist eine Außenverzahnung bezeichnet, die entsprechend der oben beschriebenen Weise mit einem Schälrad gefertigt werden kann, wobei hier anstelle einer Abstandsvergrößerung zwischen den beiden Achsen eine Abstandsverminderung bzw. umgekehrt stattfindet. Die drei Verzahnungen können in einer Aufspannung gefertigt werden. Das Werkstück 6 kann an der Spannzone 15 von einem Spannfutter gehalten werden.

Die Figur 5 zeigt eine Stufe 16, die hinter dem Ende der Verzahnung 7 liegt. Diese radial einwärts gerichtete Stufe 16 bildet eine Kollisionszone. Das Ende 7' der Nut 7 liegt unmittelbar vor der Stufe 16. Der Abstand kann geringer als der Abstand zweier benachbarter Zähne der Verzahnung sein. Zwischen dem Ende 7' der Nut 7 und der Stufe 16 ist kein Freistich oder dergleichen erforderlich, welches zu einer Materialschwächung führen könnte. Die Scheitellinie der Verzahnung 7 liegt auf der Innenwandung 9 des Rohlings 6, welche sich bis in die Rundung 17 fortsetzt, die in die Stufe 16 übergeht. Der Nutgrund 7 geht im Endbereich 7' gekrümmt in die Wandung 9 des Rohlings über.

Um das zuvor beschriebene Verfahren durchzuführen, besitzt die zuvor beschriebene Vorrichtung die dort erwähnte programmgesteuerte elektronische Steuereinrichtung. Letztere ist so eingerichtet, dass bei Verzahnen eines grob vorverzahnten oder unverzahnten Rohlings dem axialen Vorschub am Ende des Vorschubes eine radiale Austauchbewegung dem Werkrad überlagert ist.

Das zuvor beschriebene Verfahren kann nicht nur an einer Vorrichtung durchgeführt werden, die wie oben ausgeführt voreingestellt ist. Es lässt sich auch die aus der DE 10 2005 049 530 B4 her bekannte Vorrichtung zur Durchführung des Verfahrens verwenden.

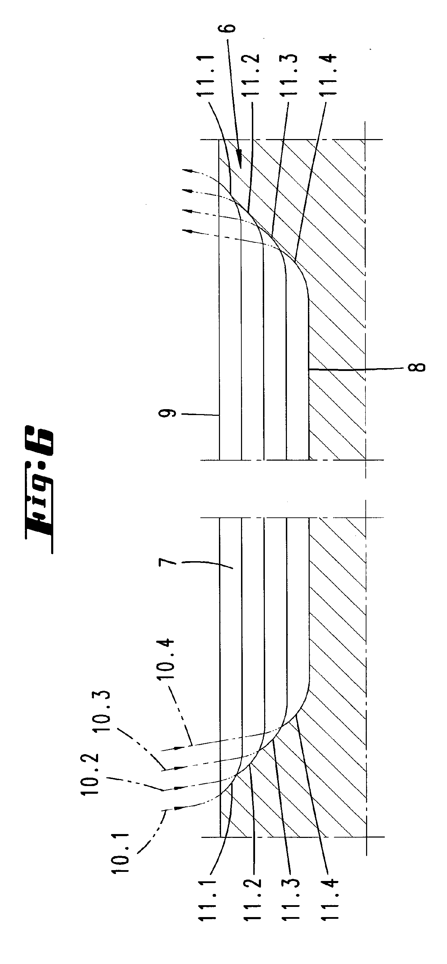

Die Figur 6 zeigt die schrittweise Fertigung einer beidseitig mit einem Sackende versehenen Nut. Der Vorschub erfolgt in Achsrichtung von links nach rechts, entlang der Schnittlinien 10.1,10.2,10.3 und 10.4, wobei sich das Werkzeug jeweils entlang der mit den Pfeilen versehenen Linie bewegt. Die Eintauchkurven sind in der Figur 6 links steiler gezeichnet als es in der Realität möglich ist. Der Eintauchwinkel hängt nämlich vom Freiwinkel des Werkzeuges ab, also vom Kegelwinkel des kegelförmigen Schälrades.

Auch hier erfolgt die schälende Bearbeitung des unverzahnten Rohlings 6 schrittweise. Lediglich beispielhaft werden hier vier Schnitte dargestellt, wobei der erste Schnitt, der entlang der Schnittlinie 10.1 verläuft, der längste Schnitt ist. Der zweite Schnitt 10.2 beginnt in Achsrichtung nach dem Beginn des ersten Schnittes 10.2, so dass die Schneidkanten 5 des Schälrades 1 in die Endrundungen 11.1 eintauchen, die vom ersten Schnitt 10.1 gefertigt worden sind. Nach Fertigung der Endrundung 11.2 erfolgt eine im Wesentlichen rein axiale Vorschubbewegung bis zum Ende der Nut 7. Hier tauchen die Schneidkanten 5 des Schneidrades 1 derart aus der zu fertigenden Innenverzahnung 7 aus, dass die dabei gefertigte Rundung 11.2 in die zuvor gefertigte Rundung 11.1 austritt. Es entsteht hier wie auch eintrittsseitig ein geringfügiger Knick in der Konturlinie. Die Austauchbewegung erfolgt auch hier in Achsrichtung vor der Austauchbewegung des vorangegangenen Schnittes 10.1.

Zu Beginn des dritten Schnittes 10.3 taucht das Schälrad 1 in der Darstellung nach rechts versetzt zur Schnittlinie 10.2 des vorangegangenen Schnittes in das Werkstück 6 ein, so dass sich eine Rundung 11.3 ergibt, die die zuvor gefertigte Rundung 11.2 unter Ausbildung eines Knicks schneidet. Die auslaufende Rundung 11.3 des dritten Schnittes 10.3 schneidet wiederum die auslaufende Rundung 11.2 des zuvor gefertigten Schnitts. Dasselbe gilt für den zuletzt gefertigten Schnitt 10.4, der von allen Schnitten der kürzeste ist. Auch hier werden die aufeinanderfolgenden Schnitte 10.1,10.2,10.3,10.4 so geführt, dass eine Schnittlinie des Schälrades von allen folgenden Schnittlinien des Schalrades gekreuzt wird, wobei die Kreuzungspunkte innerhalb der Querschnittsebene der Verzahnung liegen.

## Patentansprüche

1. Verwendung einer Vorrichtung zum Verzahnen von Werkrädern (6) durch Wälzschälen mit einer um eine Werkstückdrehachse (2) drehantreibbaren Werkstückspindel zur Aufnahme eines grob vorverzahnten oder unverzahnten Werkrades (6) und einer um eine Werkzeugdrehachse (13) drehantreibbaren, ein Schneidkanten (5) aufweisendes Schälrad (1) tragenden Werkzeugspindel, wobei die Werkzeugspindel und die Werkstückspindel in einem festen oder variierbaren Achskreuzwinkel (α) zueinander positionierbar sind, zum Zwecke eines Vorschubes und einer Zustellung die Werkzeugspindel relativ zur Werkstückspindel in Radialrichtung und Achsrichtung bezogen auf die Werkstückdrehachse (2) verlagerbar ist und wobei die Werkzeugspindel und die Werkstückspindel in einem vorgegebenen Drehzahlverhältnis ggf. mit sich ändernder Phasenlage drehantreibbar sind, **dadurch gekennzeichnet, dass** dem axialen Vorschub am Ende des Vorschubes eine radiale Austauchbewegung aus dem Werkrad (6) und/oder zu Beginn des Vorschubs eine radiale Eintauchbewegung in das Werkrad (6) überlagert ist, so dass eine Verzahnung erzeugt wird, bei der die Zahnnuten an zumindest einem Ende geschlossen sind.

2. Verfahren zum Verzahnen von Werkrädern (6) durch Wälzschälen, mit einem Schneidkanten (5) aufweisenden Schälrad (1), mit einer um eine Werkstückdrehachse (2) drehangetriebenen Werkstückspindel zur Aufnahme des Werkrades (6) und mit einer um eine Werkzeugdrehachse (13) drehangetriebenen, das Schälrad (1) tragenden Werkzeugspindel, wobei die Werkzeugspindel und die Werkstückspindel in einem festen oder variierbaren Achskreuzwinkel (α) zueinander positioniert sind, ein Vorschub bzw. eine Zustellung die Werkzeugspindel relativ zur Werkstückspindel in Radialrichtung bzw. Achsrichtung bezogen auf die Werkstückdrehachse (2) erfolgt und die Antriebe von Werkzeugspindel und Werkstückspindel in einem vorgegebenen Drehzahlverhältnis ggf. mit sich ändernder Phasenlage drehangetrieben werden, **dadurch gekennzeichnet, dass** beim Verzahnen eines grob vorverzahnten oder unverzahnten Rohlings dem axialen Vorschub am Ende des Vorschubes eine radiale Austauchbewegung aus dem Werkrad (6) und/oder zu Beginn des Vorschubs eine radiale Eintauchbewegung in das Werkrad (6) überlagert ist, so dass eine Verzahnung erzeugt wird, bei der die Zahnnuten an zumindest einem Ende geschlossen sind.

3. Verwendung nach Anspruch 1 oder Verfahren nach Anspruch 2, **dadurch gekennzeichnet, dass** die Verzahnung in mehreren aufeinanderfolgenden Schritten erfolgt, indem die Zahnnuten der Verzahnung schrittweise vertieft werden.

4. Verwendung oder Verfahren nach einem der vorhergehenden Ansprüche, **dadurch gekennzeichnet, dass** die aufeinanderfolgenden Schritte jeweils eine verminderte axiale Schnittlänge besitzen.

5. Verwendung oder Verfahren nach einem der vorhergehenden Ansprüche, **dadurch gekennzeichnet, dass** die radiale Austauchbewegung am Ende des Vorschubes eines jeden Folgeschnitts in Achsrichtung vor der radialen Austauchbewegung des jeweils vorangegangenen Schnittes erfolgt.

6. Verwendung oder Verfahren nach einem der vorhergehenden Ansprüche, **dadurch gekennzeichnet, dass** die Schneidkanten (5) des eine Schälraddrehachse (2), eine Stirnseite und Umfangsfläche aufweisenden Schälrades (1) von in der Stirnseite angeordneten Rändern von in der Umfangsfläche angeordneten Rippen (3) ausgebildet sind.

7. Verwendung oder Verfahren nach einem der vorhergehenden Ansprüche, **dadurch gekennzeichnet, dass** die Scheitellinien der Rippen (3) in einer von einer Kegelmantelfläche gebildeten Hüllfläche (4) liegen.

8. Verwendung oder Verfahren nach einem der vorhergehenden Ansprüche, **dadurch gekennzeichnet, dass** bezogen auf ein Koordinatensystem, in welchem die Werkstückspindel in der Z-Achse liegt und die X-Achse durch die Schneidkantenangriffszone geht, die Schälraddrehachse (2) in einer Parallelachse zur Y-Z-Ebene um den Winkel (α) zur Z-Richtung geneigt ist.

9. Verwendung oder Verfahren nach einem der vorhergehenden Ansprüche, **dadurch gekennzeichnet, dass** jede Schnittlinie (10.1,10.2,10.3) eines Schnitts von den Schnittlinien (10.2, 10.3, 10.4) aller Folgeschnitte gekreuzt wird, wobei die Kreuzungspunkte der Schnittlinien (10.1,10.2,10.3,10.4) innerhalb einer durch die Scheitellinie (9) der Verzahnung (7) und den Nutgrund (8) der Verzahnung (7) gebildeten Querschnittsfläche der Verzahnung (7) liegt.

10. Verwendung oder Verfahren nach einem der vorhergehenden Ansprüche, **dadurch gekennzeichnet, dass** die radiale Austauchbewegung derart der Axialbewegung überlagert ist, dass der Grund (8) der gefertigten Zahnnut (7) in Form mehrerer in Achsrichtung hintereinander liegenden Teilrundungen (11.1,11.2,11.3,11.4) ausläuft.

11. Verwendung oder Verfahren nach einem der vorhergehenden Ansprüche, **dadurch gekennzeichnet, dass** die Austauchbewegung derart der axialen Vorschubbewegung überlagert ist, dass die gefertigte Zahnnut (14) Abschnitte einen gerundeten Verlauf besitzt.

12. Verwendung oder Verfahren nach einem der vorhergehenden Ansprüche, **dadurch gekennzeichnet, dass** die Rippen (3) des Schälrades (1) einen derartigen Konturverlauf besitzen, dass auch nach mehrmaligem Nachschleifen der Schneidkante (5) sich die Konturlinien der gefertigten Zahnflanken nur geringfügig ändern.

## Claims

1. Use of a device for cutting teeth in gear blanks (6) by hob peeling, the device having a workpiece spindle for holding a coarsely precut or uncut gear blank (6), the workpiece spindle being rotationally drivable about a workpiece rotational axis (13), and the device having a tool spindle which carries a peeling wheel (1) having cutting edges (5) and which is rotationally drivable about a tool rotational axis (2), wherein the tool spindle and the workpiece spindle may be positioned relative to one another at a fixed or variable axis intersection angle (α), and for the purpose of forward feed and infeed, the tool spindle is movable relative to the workpiece spindle in the radial direction and in the axial direction with reference to the workpiece rotational axis (2), and the tool spindle and the workpiece spindle are rotationally drivable at a specified rotational speed ratio, optionally with a changing phase position, **characterized in that** a radial emerging motion out of the gear blank (6) is superimposed on the axial feed at the end of the feed and/or a radial submerging motion into the gear blank (6) is superimposed on the axial feed at the start of the feed, so that gear teeth are produced in which the tooth grooves are closed at at least one end.

2. Method for cutting teeth in gear blanks (6) by hob peeling, using a peeling wheel (1) which has cutting edges (5), using a workpiece spindle for holding the gear blank (6), the workpiece spindle being rotationally driven about a workpiece rotational axis (2), and using a workpiece spindle which carries a peeling wheel (1) and is rotationally driven about a tool rotational axis (13), wherein the tool spindle and the workpiece spindle may be positioned relative to one another at a fixed or variable axis intersection angle (α), forward feed and infeed taking place, the tool spindle in the radial direction relative to the workpiece spindle and in the axial direction with reference to the workpiece rotational axis (2), and the drives of the tool spindle and the workpiece spindle are rotationally driven at a specified rotational speed ratio, optionally with a changing phase position, **characterized in that** during cutting of teeth in a coarsely precut or uncut blank, a radial emerging motion out of the gear blank (6) is superimposed on the axial feed at the end of the feed, and/or a radial submerging motion into the gear blank (6) is superimposed on the axial feed at the start of the feed, so that gear teeth are produced in which the tooth grooves are closed at at least one end.

3. Use according to Claim 1 or method according to Claim 2, **characterized in that** the cutting of the gear teeth takes place in a plurality of successive steps, the tooth grooves of the gearing being deepened in a stepwise manner.

4. Use or method according to one of the preceding claims, **characterized in that** the successive steps each have a decreased axial cutting length.

5. Use or method according to one of the preceding claims, **characterized in that** the radial emerging motion occurs at the end of the feed of each subsequent cut in the axial direction, upstream of the radial emerging motion of the respective preceding cut.

6. Use or method according to one of the preceding claims, **characterized in that** the cutting edges (5) of the peeling wheel (1) which has a peeling wheel rotational axis (2), an end face, and a peripheral face are formed by edges, disposed in the end face, of ribs (3) disposed in the peripheral face.

7. Use or method according to one of the preceding claims, **characterized in that** the apex lines of the ribs (3) are situated in an enveloping surface (4) formed by a conical lateral surface.

8. Use or method according to one of the preceding claims, **characterized in that** with reference to a coordinate system in which the workpiece spindle lies in the Z axis and the X axis passes through the cutting edge engagement zone, the peeling wheel rotational axis (2) is inclined by the angle (α) with respect to the Z direction in an axis that is parallel to the Y-Z plane.

9. Use or method according to one of the preceding claims, **characterized in that** each cutting line (10.1, 10.2, 10.3) of a cut is intersected by the cutting lines (10.2, 10.3, 10.4) of all subsequent cuts, the intersection points of the cutting lines (10.1, 10.2, 10.3, 10.4) being situated within a cross-sectional surface of the gearing (7) formed by the apex line (9) of the gearing (7) and the groove base (8) of the gearing (7).

10. Use or method according to one of the preceding claims, **characterized in that** the radial emerging motion is superimposed on the axial motion in such a way that the base (8) of the tooth groove (7) produced terminates in the form of a plurality of partial roundings (11.1, 11.2, 11.3, 11.4) following one another in succession in the axial direction.

11. Use or method according to one of the preceding claims, **characterized in that** the emerging motion is superimposed on the axial feed motion in such a way that the tooth groove (14) produced has portions of a rounded profile.

12. Use or method according to one of the preceding claims, **characterized in that** the ribs (3) of the peeling wheel (1) have a contour such that the contour lines of the tooth flanks produced change only slightly, even after the cutting edge (5) is reground multiple times.

## Revendications

1. Utilisation d'un dispositif pour tailler des dents dans des roues à usiner (6) par taillage en développante avec une broche porte-pièce, susceptible d'être entraînée en rotation autour d'un axe de rotation de pièce (2), pour recevoir une roue à usiner (6) présentant des dents ébauchées grossièrement ou qui est dépourvue de dents et une broche porte-outil susceptible d'être entrainée en rotation autour d'un axe de rotation d'outil (13) et portant une roue de taillage (1) présentant des arêtes de coupe (5), dans lequel la broche porte-outil et la broche porte-pièce sont positionnables l'une par rapport à l'autre avec un angle d'intersection d'axes (α) fixe ou modifiable, la broche porte-outil relativement à la broche porte-pièce étant déplaçable en direction radiale et en direction axiale par rapport l'axe de rotation de pièce (2) aux fins d'avance et de plongée et dans lequel la broche porte-outil et la broche porte-pièce sont susceptibles d'être entrainées en rotation avec un rapport de vitesse de rotation prédéterminé le cas échéant avec une position de phase qui varie, **caractérisé en ce qu'**est superposé à l'avance axiale un déplacement radial de dégagement hors de la roue à usiner (6) en fin de mouvement d'avance et/ou un déplacement de plongée radiale dans la roue à usiner (6) au début du mouvement d'avance de manière à former une denture pour laquelle les rainures de dents sont fermées au moins à une extrémité.

2. Procédé pour tailler des dents dans des roues à usiner (6) par taillage en développante, avec une roue de taillage (1) présentant des arêtes de coupe (5), avec une broche porte-pièce entraînée en rotation autour d'un axe de rotation de pièce (2) pour recevoir la roue à usiner (6) et avec une broche porte-outil entrainée en rotation autour d'un axe de rotation d'outil (13) qui porte la roue de taillage (1), dans lequel la broche porte-outil et la broche porte-pièce sont positionnées l'une par rapport à l'autre avec un angle d'intersection d'axes (α) fixe ou modifiable, dans lequel a lieu un mouvement d'avance et en particulier une plongée de la broche porte-outil relativement à la broche porte-pièce en direction radiale, respectivement en direction axiale par rapport l'axe de rotation de pièce (2) et dans lequel la broche porte-outil et la broche porte-pièce sont entrainées en rotation avec un rapport de vitesse de rotation prédéterminé le cas échéant avec une position de phase qui varie, **caractérisé en ce que**, lors du taillage de dents dans une pièce brute présentant des dents ébauchées grossièrement ou qui est dépourvue de dents, est superposé à l'avance axiale un déplacement radial de dégagement hors de la roue à usiner (6) en fin de mouvement d'avance et/ou un déplacement de plongée radiale dans la roue à usiner (6) au début du mouvement d'avance de manière à former une denture pour laquelle les rainures de dents sont fermées au moins à une extrémité.

3. Utilisation selon la revendication 1 ou procédé selon la revendication 2, **caractérisé en ce que** la denture est réalisée par plusieurs passes successives lors desquelles les rainures de dents sont approfondies passe après passe.

4. Utilisation ou procédé selon l'une des revendications précédentes, **caractérisé en ce que** les passes successives ont à chaque fois une longueur de coupe axiale réduite.

5. Utilisation ou procédé selon l'une des revendications précédentes, **caractérisé en ce que** le déplacement radial de dégagement en fin de mouvement d'avance a lieu à chaque fois en direction axiale pour chaque passe suivante avant le déplacement radial de dégagement de la passe qui précède.

6. Utilisation ou procédé selon l'une des revendications précédentes, **caractérisé en ce que** les arêtes de coupe (5) de la roue de taillage (1) présentant un axe de rotation de roue de taillage (2), un côté frontal et une surface circonférentielle, sont formées par les bords agencés dans le côté frontal, des nervures (3) agencées dans la surface circonférentielle.

7. Utilisation ou procédé selon l'une des revendications précédentes, **caractérisé en ce que** les lignes de crête des nervures (3) se situent dans une surface d'enveloppe (4) formée par une surface conique.

8. Utilisation ou procédé selon l'une des revendications précédentes, **caractérisé en ce que** l'axe de rotation de la roue de taillage (2) est selon un axe parallèle au plan Y-Z incliné avec l'angle (α) par rapport à la direction Z dans un système de coordonnées dans lequel la broche porte-pièce est disposée suivant l'axe Z et l'axe X passe par la zone d'attaque des arêtes de coupe.

9. Utilisation ou procédé selon l'une des revendications précédentes, **caractérisé en ce que** chaque ligne de coupe (10.1, 10.2, 10.3) d'une passe est croisée par les lignes de coupe (10.2, 10.3, 10.4) de toutes les passes suivantes, dans lequel les points de croisement des lignes de coupes (10.1, 10.2, 10.3, 10.4) sont situés dans une surface transversale de la denture (7) formée par la ligne de crête (9) de la denture (7) et le fond de rainure (8) de la denture (7).

10. Utilisation ou procédé selon l'une des revendications précédentes, **caractérisé en ce que** le déplacement radial de dégagement est superposé au déplacement axial de manière à ce que le fond (8) de la rainure de dent (7) à l'état finie se termine en forme de plusieurs arrondis de pièce disposés les uns derrière les autres dans la direction axiale.

11. Utilisation ou procédé selon l'une des revendications précédentes, **caractérisé en ce que** le déplacement de dégagement est superposé au déplacement d'avance axial de manière à ce que la rainure de dent (14) à l'état finie présente un tracé arrondi.

12. Utilisation ou procédé selon l'une des revendications précédentes, **caractérisé en ce que** les nervures (3) de la roue de taillage (1) présentent un tracé de contour tel que les lignes de contour des flancs de dents à l'état finie ne soient modifiées que légèrement même après plusieurs réaffutages des arêtes de coupe (5).
